# EUROPEAN PATENT SPECIFICATION

(11) **EP 1 757 193 B1**
(45) Date of publication and mention of the grant of the patent: **05.05.2010**
(21) Application number: 06077097.1
(22) Date of filing: 23.07.2003
(51) Int. Cl.: A23L 1/09, A23P 1/08, A23G 3/00

(54) **Polyol coated food products**
Polyolbeschichtete Lebensmittel
Produits alimentaires enrobes par des polyols

(30) Priority: 23.07.2002 GB 0217076
(43) Date of publication of application: 28.02.2007
(62) Divisional of application: 03765180.9
(73) Proprietor: WM. Wrigley Jr., Company, Chicago, IL 60611 (US)
(72) Inventor: Johnston, Andrew Gordon, Slough SL1 4JX (GB); Meyer, Jeremy Z., Slough SL1 4JX (GB)
(74) Representative: Millburn, Julie Elizabeth

(56) References cited:
- EP-A- 0 305 356
- WO-A-95/07625
- US-A- 3 477 858
- US-A- 3 552 979
- US-A- 3 556 814
- US-A- 3 769 438
- US-A- 4 146 653
- US-A- 5 580 601
- US-A- 5 900 261
- US-A1- 2002 031 573

## Description

The present invention relates to a novel foodstuff, such as a confectionery product.

Confectionery products comprising a hard core surrounded by a hard sugar coating or shell are well known. The sugar coatings or shells of such products are commonly formed by hard panning cores in a rotary pan. In this process, a sugar syrup is sprayed over the cores to coat them and the water in the syrup is then evaporated, typically in a flow of warm air, to crystallise the sugar as a hard, thin coating. The spraying and drying steps must be repeated several times in order to build up a sugar coating of satisfactory thickness. To allow each sugar layer to set before the next is applied, significant drying times are required between successive syrup sprayings; this results in the overall hard panning process being slow. Furthermore, large quantities of well controlled drying air or conditioning equipment are required in order to evaporate the water from the sugar syrup.
During hard panning, as the water is evaporated from the syrup to crystallise the sugar the viscosity of the syrup gradually increases. This makes such coating techniques employing sugar syrups unsuitable for coating soft, fragile cores; an increase in adhesiveness, associated with the increase in viscosity, causes the cores to stick to one another, tearing them apart. In addition, the use of sugar syrups in such techniques makes them unsuitable for coating cores which absorb sugar syrup or which are moisture sensitive or hygroscopic.
US-A-2002/0031573 describes products such as soft candy having a hard coating formed by applying a solution comprising a sugar alcohol and evaporating moisture.
Coated soft centres typically have soft coatings for example chocolate or soft panned sugar coatings, such as those on jelly beans.
It has now been found that coated foodstuffs may be produced having hard, crystalline, sugar free coatings which resemble hard panned sugar coatings in texture and taste, and which are shiny or lustrous and so, in contrast to hard panned sugar coatings, do not need to be polished to achieve an acceptable finish.

US-A-3 552 979, US-A-4 146 653, US-A-3 477 858 and EP-A-0 305 356 describe confectionary products coated with a solidified melt comprising sorbitol, mannitol or xylitol.

It has also now been found that hard, crystalline coatings may be applied to fragile cores which cannot be coated using sugar syrups by conventional hard panning.

According to the present invention there is provided a method of manufacturing a coated foodstuff having a fragile core and a hard coating around the fragile core comprising: forming a fragile core; melting a coating material consisting substantially of one or more polyols; applying the molten coating material around the fragile core; and solidifying the molten coating material to form a crystalline coating around the fragile core, as claimed in claim 1.

The term fragile core is used throughout the specification to mean a core to which a hard panned sugar coating cannot be applied either because the core absorbs sugar syrup or is moisture sensitive or hygroscopic and/or because the structural integrity of the core is insufficient to withstand the increase in viscosity and associated increase in adhesiveness which occurs as water is evaporated from a sugar syrup to crystallise the sugar. The fragile cores comprise soft fondants, marshmallows or aerated or expanded products, including expanded malted balls such as the centres of Maltesers® made by Mars UK.

Preferably the method comprises dipping the core in the molten coating material or spraying the molten coating material onto the core.

Preferably the method comprises melting a coating material comprising at least 90% erythritol or mannitol by weight, more preferably at least 95% erythritol or mannitol by weight.

Preferably the method comprises melting a coating material comprising at least 90% erythritol or mannitol by weight and up to 10% by weight of at least one further polyol, being mannitol, erythritol, xylitol, sorbitol, maltitol, lactitol, isomaltulose or isomalt by weight, more preferably melting a coating material comprising at least 95% erythritol or mannitol by weight and up to 5% by weight of at least one further polyol, being mannitol, erythritol, xylitol, sorbitol, maltitol, lactitol, isomaltulose or isomalt.

The coating may also comprise other edible ingredients such as colourants, flavourants, acids, artificial sweeteners, preservatives and antioxidants. The coating may also comprise air, carbon dioxide, nitrogen, bicarbonate or other sources of gas.

Preferably the core comprises a polyol, more preferably erythritol or xylitol.

Preferably the core contains between about 60% and about 90% erythritol or xylitol by weight, between about 2% and about 25% fat by weight and between about 2% and about 20% polyol syrup by weight, more preferably between about 75% and about 85% erythritol or xylitol by weight, between about 10% and about 20% fat by weight and between about 2% and about 10% polyol syrup by weight.

Also according to the invention there is provided a coated foodstuff having a fragile core and a hard coating around the core characterised in that the coating consists substantially of a crystalline polyol, as claimed in claim 13.

Preferably the coating contains at least 90% crystalline erythritol or mannitol by weight, more preferably at least 95% crystalline erythritol or mannitol by weight.

Preferably the coating further comprises up to 10% by weight of a second polyol, being mannitol, erythritol, xylitol, sorbitol, maltitol, lactitol, isomaltulose or isomalt, more preferably up to 5% by weight of the second polyol. The inclusion of a second polyol improves the distribution of the coating over the core and provides a smoother coating than erythritol or mannitol alone.

Preferably the thickness of the coating is about 1.0mm or less, more preferably about 0.5mm or less.

Preferably the coating is 50% or less by weight of the foodstuff, more preferably about 30% or less by weight of the foodstuff.

The coating may also comprise other common confectionery ingredients such as colourants, flavourants, acidulants, artificial sweeteners, preservatives and antioxidants. The coating may also comprise air, carbon dioxide, nitrogen, bicarbonate or other sources of gas.

Preferably the core comprises a polyol, more preferably erythritol or xylitol.

Preferably the core contains between about 60% and about 90% erythritol or xylitol by weight, between about 2% and about 25% fat by weight and between about 2% and about 20% polyol syrup by weight, more preferably between about 75% and about 85% erythritol or xylitol by weight, between about 10% and about 20% fat by weight and between about 2% and about 10% polyol syrup by weight.

Encapsulating cores with a thin, for example 0.5mm or less, coating of a molten polyol by the methods of the invention produces a robust shell which is tolerant to being worked, for example, processed, tumbled and packed. By reducing the thickness of the coating required to produce a satisfactory coating or shell, the invention enables coated foodstuffs to be produced in which the proportion of the foodstuff made up of the core may be greatly increased compared to hard panned sugar coated products.

A number of polyols, such as xylitol and erythritol, are known to deliver a cooling effect in the mouth when consumed due to their high negative heats of solution. By using polyols, preferably erythritol, as coating materials in combination with polyol, preferably erythritol or xylitol, based cores such as fondants, the methods of the invention enable coated confectioneries which deliver an intense cooling effect and which have improved cooling power over known polyol containing products to be manufactured; upon ingestion, the polyol based fondant may disappear rapidly, but the cooling effect delivered by the crystalline polyol coating continues.

By using polyols as the coating material in the methods of the invention it is possible to produce hard, crystalline coatings which are sugar free.

The invention will be further described, by way of the following examples of specific embodiments thereof:

### Example 1

Spherical fondant cores, 0.5 to 1.5cm in diameter, comprising. by weight. 80.7% icing sugar, 8.7% hydrogenated vegetable fat, 8.2% invert syrup and 2.4% colourant and flavourant are mounted on wooden sticks and dipped in bath of molten erythritol at 130°C, containing 0.25% by weight of aqueous 10% quinolline yellow solution, and then chilled in a refrigerator at 0-5°C for 5 to 10 minutes. The cores are then removed from the refrigerator and the dipping and chilling steps repeated twice.

### Example 2

2.5kg of the spherical fondant cores of Example 1, 0.5 to 1.5cm in diameter, are placed in a rotating pan and sprayed or dribbled with 60g to 80g of molten erythritol at 130°C, containing 0.25% by weight of aqueous 10% quinolline yellow solution. Cold air at 0-5°C is then applied to the tumbling cores for 10 minutes. The dribbling/spraying and cooling steps are then repeated three times.

### Example 3

Spherical fondant cores, 0.5 to 1.5cm in diameter, comprising 80.6% erythritol, 6.0% hydrogenated vegetable fat, 12.0% maltitol syrup (80% solids), 1.0% citric acid, 0.2% of aqueous 10% quinolline yellow solution and 0.2% flavourant are dropped into a bath of molten erythritol at 130°C, containing 0.25% by weight of aqueous 10% quinolline yellow solution and 1.8% by weight 50/50 citric acid/malic acid blend. The cores are then recovered from the bath using a fork and rolled along a flat metallic bench. The cores are then cooled for 5 to 10 minutes either in a refrigerator at 0-5°C or with cold air at 0-5°C. The dipping, rolling and cooling steps are then repeated.

### Example 4

Spherical fondant cores, 0.5 to 1.5cm in diameter, comprising, by weight, 82.3% xylitol, 12.0% hydrogenated vegetable fat, 4.0% sorbitol syrup (70% solids), 1.3% citric acid, 0.2% of aqueous 10% quinolline yellow solution and 0.2% flavourant are dropped into a bath of molten erythritol at 130°C, containing 0.25% by weight of aqueous 10% quinolline yellow solution and 1.8% by weight 50/50 citric acid/malic acid blend. The cores are then recovered from the bath using a fork and rolled along a flat metallic bench. The cores are then cooled for 5 to 10 minutes either in a refrigerator at 0-5°C or with cold air at 0-5°C. The dipping, rolling and cooling steps are then repeated three times.

Example 1 produced coated foodstuffs consisting of a spherical fondant core surrounded by a hard, smooth, brittle coating. The coating exhibited a yellow/orange pearlescent character.

In Example 2, the molten erythritol solidified almost instantaneously upon coming into contact with the fondant cores and the cores showed no tendency to adhere to one another. The coated foodstuffs produced consisted of a fondant core surrounded by a hard, brittle coating that exhibited a yellow/orange pearlescent character.

In Examples 3 and 4, during the rolling steps the molten erythritol did not adhere to the metallic bench, while the coated foodstuffs remained intact.

Examples 3 and 4 produced coated foodstuffs, each weighing 1.3g, consisting of a fondant core surrounded by a hard, strong, 0.5mm thick coating. The coating was 40% by weight of the foodstuff. Once again, the coating exhibited a yellow/orange pearlescent character. The cooling effects delivered by the polyol based fondant cores were enhanced and prolonged by the cooling effect of the crystalline erythritol coating.

Although in the above Examples the fragile cores were coated using molten erythritol, the same techniques may be employed to coat fragile cores with molten mannitol or with a molten mixture of erythritol or mannitol and a second polyol. It will be appreciated that if molten mannitol is used instead of molten erythritol a higher temperature must be employed due to the higher melting point of mannitol compared to erythritol, 167°C and 124°C respectively.
Inclusion of up to 5% by weight of a second polyol, being erythritol, mannitol, erythritol, xylitol, sorbitol, maltitol, lactitol, isomaltulose or isomalt, leads to a reduction in melting point of about 17°C, such that the resultant erythritol and mannitol based mixtures melt at 107°C and 150°C respectively.

In all of the above Examples, aqueous 10% quinolline yellow solution was added to the molten erythritol in order to aid visual assessment of the quality of the coatings produced. It will be readily appreciated that a variety of colourants, flavourants, acidulants, artificial sweeteners, preservatives, antioxidants and edible additives may be added to the molten coating, provided that where the coating is being used to coat fragile cores the liquid coating material still solidifies rapidly to a crystalline form with substantially no increase in viscosity. It will further be appreciated that insoluble colourants or other additives may be employed as dispersion in the molten coating material without the need for solution. Air, carbon dioxide, nitrogen, bicarbonate or other sources of gas may also be incorporated into the coating to give an aerated effect if desired.

While fondant cores are employed in the Examples given above, it will be readily appreciated by those skilled in the art that hard, shiny or lustrous coatings comprising at least 90% crystalline erythritol by weight may similarly be formed on cores comprising marshmallow or expanded or aerated products.

It will also be appreciated that while hydrogenated vegetable fat is employed in the fondant cores in the above Examples, other fats, such as lauric fats could alternatively be employed. A preferred hydrogenated vegetable fat is that known as General purpose Fat Extra Hard.

Similarly, while in the Examples above the cores are spherical, it will be readily appreciated that cores having other shapes could be employed, such as, for example, cuboid, toroidal, egg-shaped, pillow-shaped, almond-shaped or torpedo-shaped cores. The application of successive layers of viscous sugar syrup to cores in known coating methods, such as hard panning, tends to increase the roundness of the cores. Consequently, when employing such methods it is difficult to produce a coated confectionery whose overall shape conforms to that of the core if the core is significantly non-spherical. The use of a coating material comprising a polyol that melts to give a low viscosity liquid, which solidifies rapidly to a crystalline form with substantially no increase in viscosity, in the methods of the present invention mitigates this problem, particularly when the coating is formed by dipping the core in the molten coating material.

By eliminating the need for viscous syrups, the method of the invention enables foodstuffs having fragile cores and hard, crystalline coatings to be produced. By eliminating the need for sugar syrups containing water, the method of the invention also enables foodstuffs having hard, crystalline coatings and cores which absorb sugar syrup or which are moisture sensitive or hygroscopic to be produced.

A second coating, which may be incompatible with the core, can then be applied to the coated core. For example, a fragile hygroscopic core can be encased within a polyol coating by the method of the invention and then a further aqueous coating, such as a sugar syrup coating, may be applied to the coated core.

As the methods of the present invention do not involve the evaporation of water from a sugar syrup, the need for large quantities of well controlled drying air or conditioning equipment, as required in hard panning processes, is also eliminated.

As the molten coating material solidifies rapidly, the methods of the invention also enable cores to be coated in much reduced times compared to those required with hard panning techniques.

## Claims

1. A method of manufacturing a coated foodstuff having a core comprising a soft fondant, marshmallow or expanded or aerated product to which a hard panned sugar coating cannot be applied either because the core absorbs sugar syrup or is moisture sensitive or hygroscopic or because the structural integrity of the core is insufficient to withstand the increase in viscosity and associated increase in adhesiveness which occurs as water is evaporated from a sugar syrup to crystallise the sugar, and a hard coating around the core, the method comprising:
(a) forming a soft fondant, marshmallow or expanded or aerated confectionery product;
(b) melting a coating material consisting substantially of one or more polyols;
(c) applying the molten coating material around the soft fondant, marshmallow or expanded or aerated confectionery product; and
(d) solidifying the molten coating material to form a crystalline coating around the soft fondant, marshmallow or expanded or aerated confectionery product.

2. A method according to claim 1 wherein step (c) comprises dipping the core in the molten coating material.

3. A method according to claim 1 wherein step (c) comprises spraying the molten coating material onto the core.

4. A method according to claim 1, 2 or 3 wherein step (b) comprises melting a coating material comprising at least 90% erythritol or mannitol by weight.

5. A method according to any of claims 1 to 4 wherein step (b) comprises melting a coating material comprising at least 95% erythritol or mannitol by weight.

6. A method according to claim 4 wherein step (b) comprises melting a coating material comprising at least 90% erythritol or mannitol by weight and up to 10% by weight of at least one further polyol, being mannitol, erythritol, xylitol, sorbitol, maltitol, lactitol, isomaltulose or isomalt.

7. A method according to claim 5 wherein step (b) comprises melting a coating material comprising at least 95% erythritol or mannitol by weight and up to 5% by weight of at least one further polyol, being mannitol, erythritol, xylitol, sorbitol, maltitol, lactitol, isomaltulose or isomalt.

8. A method according to any of claims 1 to 7 of manufacturing a coated foodstuff having a core comprising a polyol wherein step (a) comprises forming a core comprising a polyol.

9. A method according to claim 8 of manufacturing a coated foodstuff having a core comprising erythritol or xylitol wherein step (a) comprises forming a core comprising erythritol or xylitol.

10. A method according to claim 1 of manufacturing a coated soft fondant wherein step (a) comprises forming a soft fondant comprising between 75% and 85% erythritol or xylitol by weight, between 10% and 20% fat by weight and between 2% and 10% polyol syrup by weight.

11. A method according to any of claims 1 to 10 further comprising applying a further coating material to the coated core formed in step (d).

12. A method according to claim 11 comprising applying a sugar syrup to the coated core formed in step (d).

13. A coated foodstuff comprising:
a core comprising a soft fondant, marshmallow or expanded or aerated confectionery product to which a hard panned sugar coating cannot be applied either because the core absorbs sugar syrup or is moisture sensitive or hygroscopic or because the structural integrity of the core is insufficient to withstand the increase in viscosity and associated increase in adhesiveness which occurs as water is evaporated from a sugar syrup to crystallise; and
a hard coating consisting substantially of one or more crystalline polyols around the soft fondant, marshmallow or expanded or aerated confectionery product core, wherein the coating is a solidified melt.

14. A coated foodstuff according to claim 13 wherein the coating comprises at least 90% crystalline erythritol or mannitol by weight.

15. A coated foodstuff according to claim 13 or 14 wherein the coating comprises at least 95% crystalline erythritol or mannitol by weight.

16. A coated foodstuff according to claim 15 wherein the coating further comprises up to 10% by weight of a second polyol, being mannitol, erythritol, xylitol, sorbitol, maltitol, lactitol, isomaltulose or isomalt.

17. A coated foodstuff according to claim 15 wherein the coating further comprises up to 5% by weight of a second polyol, being mannitol, erythritol, xylitol, sorbitol, maltitol, lactitol, isomaltulose or isomalt.

## Patentansprüche

1. Verfahren zur Herstellung eines beschichteten Nahrungsmittels mit einem Kern aus einem weichen Fondant, einem Marshmallow oder einem expandierten oder mit Luft durchsetzten Produkt, auf den keine harte Zuckerdrageeschicht aufgebracht werden kann, weil der Kern entweder Zuckersirup absorbiert oder feuchtigkeitsempfindlich oder hygroskopisch ist oder weil die strukturelle Integrität des Kerns unzureichend ist, um der Viskositätszunahme und der damit verbundenen Klebrigkeitszunahme standzuhalten, die auftritt, wenn Wasser von einem Zuckersirup zum Kristallisieren des Zuckers verdampft wird, und einer harten Beschichtung um den Kern, wobei das Verfahren die folgenden Schritte beinhaltet:
(a) Bilden eines weichen Fondants, Marshmallows oder expandierten oder mit Luft durchsetzten Süßwarenprodukts;
(b) Schmelzen eines Beschichtungsmaterials, das im Wesentlichen aus einem oder mehreren Polyolen besteht;
(c) Auftragen des geschmolzenen Beschichtungsmaterials um den weichen Fondant, das Marshmallow oder das expandierte oder mit Luft durchsetzte Süßwarenprodukt; und
(d) Verfestigen des geschmolzenen Beschichtungsmaterials, um eine kristalline Beschichtung um den weichen Fondant, das Marshmallow oder das expandierte oder mit Luft durchsetzte Süßwarenprodukt zu bilden.

2. Verfahren nach Anspruch 1, wobei Schritt (c) das Eintauchen des Kerns in das geschmolzene Beschichtungsmaterial beinhaltet.

3. Verfahren nach Anspruch 1, wobei Schritt (c) das Sprühen des geschmolzenen Beschichtungsmaterials auf den Kern beinhaltet.

4. Verfahren nach Anspruch 1, 2 oder 3, wobei Schritt (b) das Schmelzen eines Beschichtungsmaterials beinhaltet, das wenigstens 90 Gew.-% Erythritol oder Mannitol umfasst.

5. Verfahren nach einem der Ansprüche 1 bis 4, wobei Schritt (b) das Schmelzen eines Beschichtungsmaterials beinhaltet, das wenigstens 95 Gew.-% Erythritol oder Mannitol umfasst.

6. Verfahren nach Anspruch 4, wobei Schritt (b) das Schmelzen eines Beschichtungsmaterials beinhaltet, das wenigstens 90 Gew.-% Erythritol oder Mannitol und bis zu 10 Gew.-% wenigstens eines weiteren Polyols wie Mannitol, Erythritol, Xylitol, Sorbitol, Maltitol, Lactitol, Isomaltulose oder Isomalt umfasst.

7. Verfahren nach Anspruch 5, wobei Schritt (b) das Schmelzen eines Beschichtungsmaterials beinhaltet, das wenigstens 95 Gew.-% Erythritol oder Mannitol und bis zu 5 Gew.-% wenigstens eines weiteren Polyols wie Mannitol, Erythritol, Xylitol, Sorbitol, Maltitol, Lactitol, Isomaltulose oder Isomalt umfasst.

8. Verfahren nach einem der Ansprüche 1 bis 7 zur Herstellung eines beschichteten Nahrungsmittels mit einem Kern, der ein Polyol umfasst, wobei Schritt (a) das Bilden eines ein Polyol umfassenden Kerns beinhaltet.

9. Verfahren nach Anspruch 8 zur Herstellung eines beschichteten Nahrungsmittels mit einem Kern, der Erythritol oder Xylitol umfasst, wobei Schritt (a) das Bilden eines Eryhritol oder Xylitol umfassenden Kerns beinhaltet.

10. Verfahren nach Anspruch 1 zur Herstellung eines beschichteten weichen Fondants, wobei Schritt (a) das Bilden eines weichen Fondants beinhaltet, der zwischen 75 und 85 Gew.-% Erythritol oder Xylitol, zwischen 10 und 20 Gew.-% Fett und zwischen 2 und 10 Gew.-% Polyolsirup umfasst.

11. Verfahren nach einem der Ansprüche 1 bis 10, das ferner das Auftragen eines weiteren Beschichtungsmaterials auf den in Schritt (d) gebildeten beschichteten Kern beinhaltet.

12. Verfahren nach Anspruch 11, das das Auftragen eines Zuckersirups auf den in Schritt (d) gebildeten beschichteten Kern beinhaltet.

13. Beschichtetes Nahrungsmittel, das Folgendes umfasst:
einen Kern, der einen weichen Fondant, ein Marshmallow oder ein expandiertes oder mit Luft durchsetztes Süßwarenprodukt umfasst, auf den keine harte Zuckerdrageeschicht aufgebracht werden kann, weil der Kern entweder Zuckersirup absorbiert oder feuchtigkeitsempfindlich oder hygroskopisch ist oder weil die strukturelle Integrität des Kerns unzureichend ist, um der Viskositätszunahme und der damit verbundenen Klebrigkeitszunahme standzuhalten, die auftritt, wenn Wasser von einem Zuckersirup zum Kristallisieren verdampft wird, und
eine harte Beschichtung, die im Wesentlichen aus einem oder mehreren kristallinen Polyolen um den Kern aus weichem Fondant, Marshmallow oder expandiertem oder mit Luft durchsetztem Süßwarenprodukt besteht, wobei die Beschichtung eine verfestigte Schmelze ist.

14. Beschichtetes Nahrungsmittel nach Anspruch 13, wobei die Beschichtung wenigstens 90 Gew.-% an kristallinem Erythritol oder Mannitol umfasst.

15. Beschichtetes Nahrungsmittel nach Anspruch 13 oder 14, wobei die Beschichtung wenigstens 95 Gew.-% an kristallinem Erythritol oder Mannitol umfasst.

16. Beschichtetes Nahrungsmittel nach Anspruch 15, wobei die Beschichtung ferner bis zu 10 Gew.-% eines zweiten Polyols wie Mannitol, Erythritol, Xylitol, Sorbitol, Maltitol, Lactitol, Isomaltulose oder Isomalt umfasst.

17. Beschichtetes Nahrungsmittel nach Anspruch 15, wobei die Beschichtung ferner bis zu 5 Gew.-% eines zweiten Polyols wie Mannitol, Erythritol, Xylitol, Sorbitol, Maltitol, Lactitol, Isomaltulose oder Isomalt umfasst.

## Revendications

1. Procédé de fabrication d'un produit alimentaire enrobé ayant un centre comprenant un fondant tendre, de la guimauve ou un produit gonflé ou aéré sur lequel un enrobage de sucre dur ne peut pas être appliqué soit parce que le centre absorbe le sirop de sucre ou est sensible à l'humidité ou hygroscopique, soit parce que l'intégrité structurelle du centre est insuffisante pour résister à l'augmentation de la viscosité et l'augmentation associée d'adhésivité qui se produit quand l'eau s'évapore d'un sirop de sucre pour cristalliser le sucre, et un enrobage dur autour du centre, le procédé comprenant :
(a) la formation d'un fondant tendre, de guimauve ou d'un produit de confiserie gonflé ou aéré ;
(b) la fusion d'une matière d'enrobage consistant essentiellement en un ou plusieurs polyols ;
(c) l'application de la matière d'enrobage fondue autour du fondant tendre, de la guimauve ou du produit de confiserie gonflé ou aéré ; et
(d) la solidification de la matière d'enrobage fondue afin de former un enrobage cristallin autour du fondant tendre, de la guimauve ou du produit de confiserie gonflé ou aéré.

2. Procédé selon la revendication 1, dans lequel l'étape (c) comprend le trempage du centre dans la matière d'enrobage fondue.

3. Procédé selon la revendication 1, dans lequel l'étape (c) comprend la pulvérisation de la matière d'enrobage fondue sur le centre.

4. Procédé selon la revendication 1, 2 ou 3, dans lequel l'étape (b) comprend la fusion d'une matière d'enrobage comprenant au moins 90% d'érythritol ou de mannitol en poids.

5. Procédé selon l'une quelconque des revendications 1 à 4, dans lequel l'étape (b) comprend la fusion d'une matière d'enrobage comprenant au moins 95% d'érythritol ou de mannitol en poids.

6. Procédé selon la revendication 4, dans lequel l'étape (b) comprend la fusion d'une matière d'enrobage comprenant au moins 90% d'érythritol ou de mannitol en poids et jusqu'à 10% en poids d'au moins un autre polyol, étant du mannitol, érythritol, xylitol, sorbitol, maltitol, lactitol, isomaltulose ou isomalt.

7. Procédé selon la revendication 5, dans lequel l'étape (b) comprend la fusion d'une matière d'enrobage comprenant au moins 95% d'érythritol ou de mannitol en poids et jusqu'à 5% en poids d'au moins un autre polyol, étant du mannitol, érythritol, xylitol, sorbitol, maltitol, lactitol, isomaltulose ou isomalt.

8. Procédé selon l'une quelconque des revendications 1 à 7 de fabrication d'un produit alimentaire enrobé ayant un centre comprenant un polyol dans lequel l'étape (a) comprend la formation d'un centre comprenant un polyol.

9. Procédé selon la revendication 8 de fabrication d'un produit alimentaire enrobé ayant un centre comprenant de l'érythritol ou du xylitol dans lequel l'étape (a) comprend la formation d'un centre comprenant de l'érythritol ou du xylitol.

10. Procédé selon la revendication 1 de fabrication d'un fondant tendre enrobé dans lequel l'étape (a) comprend la formation d'un fondant tendre comprenant entre 75% et 85% d'érythritol ou de xylitol en poids, entre 10% et 20% en poids de matière grasse et entre 2% et 10% de syrop de polyol en poids.

11. Procédé selon l'une quelconque des revendications 1 à 10, comprenant en outre l'application d'une autre matière d'enrobage sur le centre enrobé formé à l'étape (d).

12. Procédé selon la revendication 11, comprenant l'application d'un sirop de sucre sur le centre enrobé formé à l'étape (d).

13. Produit alimentaire enrobé comprenant :
un centre comprenant un fondant tendre, de la guimauve ou un produit gonflé ou aéré sur lequel un enrobage de sucre dur ne peut pas être appliqué soit parce que le centre absorbe le sirop de sucre ou est sensible à l'humidité ou hygroscopique, soit parce que l'intégrité structurelle du centre est insuffisante pour résister à l'augmentation de la viscosité et l'augmentation associée d'adhésivité qui se produit quand l'eau s'évapore d'un sirop de sucre à cristalliser ; et
un enrobage dur consistant essentiellement en un ou plusieurs polyols cristallins autour du fondant tendre, de la guimauve, ou du produit de confiserie gonflé ou aéré, dans lequel l'enrobage est une matière fondue solidifiée.

14. Produit alimentaire selon la revendication 13, dans lequel l'enrobage comprend au moins 90% d'érythritol ou de mannitol cristallin en poids.

15. Produit alimentaire selon la revendication 13 ou 14, dans lequel l'enrobage comprend au moins 95% d'érythritol ou de mannitol cristallin en poids.

16. Produit alimentaire selon la revendication 15, dans lequel l'enrobage comprend en outre jusqu'à 10% en poids d'au moins un second polyol, étant du mannitol, érythritol, xylitol, sorbitol, maltitol, lactitol, isomaltulose ou isomalt.

17. Produit alimentaire selon la revendication 15, dans lequel l'enrobage comprend en outre jusqu'à 5% en poids d'un second polyol, étant du mannitol, érythritol, xylitol, sorbitol, maltitol, lactitol, isomaltulose ou isomalt.
